# EUROPEAN PATENT APPLICATION

(11) **EP 2 251 775 A1**
(43) Date of publication of application: **17.11.2010**
(21) Application number: 10160736.4
(22) Date of filing: 22.04.2010
(51) Int. Cl.: G06F 3/048, G06F 3/01

(54) **Rotary input device and electronic equipment**

(30) Priority: 22.04.2009 JP 2009104054
(71) Applicant: Funai Electric Co., Ltd., Daito-shi, Osaka 574-0013 (JP); Pro-tech Design Corporation, Osachi Okaya-shi Nagano 394-0081 (JP)
(72) Inventor: Nagashima, Kenji, Daito-shi Osaka 574-0013 (JP); Tsubota, Hirono, Daito-shi Osaka 574-0013 (JP); Suzuki, Takahiko, Okaya-shi Nagano 394-0081 (JP); Kodaira, Takeshi, Okaya-shi Nagano 394-0081 (JP)
(74) Representative: Grünecker, Kinkeldey, Stockmair & Schwanhäusser Anwaltssozietät

(57) **Abstract**

Disclosed is a rotary input device, including: a rotary operation device; a rotation detecting section; a rotation driving section; a judging section to judge whether the detected rotation angle of the rotary operation device is a predetermined angle corresponding to a displayed selection item or not; a generating section to generate a switching signal when it is judged the rotation angle is the predetermined angle; and a rotation controlling section to control of a rotation drive to give the operator a force sense by a combination of at least any two of applying the rotary force in a normal rotation direction, applying the rotary force in a reverse rotation direction, and stopping applying the rotary force, when the judging section judges that the rotation angle of the rotary operation device is the predetermined angle.

## Description

### BACKGROUND OF THE INVENTION

### Field of the Invention

The present invention relates to a rotary input device and electronic equipment equipped with the rotary input device.

### Description of Related Art

A rotary input device has hitherto been known which is adopted by electronic equipment, such as a portable terminal machine, audio visual (AV) equipment, and a personal computer, and performs an input operation by a rotary operation of a rotary operation device. Such a rotary input device is configured to sequentially switch selection items displayed on the display screen of electronic equipment to select a selection item in conjunction with the rotation of the rotary operation device thereof. After an operator has manually rotated the rotary operation device until an objective selection item has been selected, the operator performs an operation to fix the selection, and thereby the instruction according to the selected selection item is input into the electronic equipment.

The rotary input device described above, however, only performs a rotary operation of the rotary operation device simply to switch and select the respective selection items on the screen of the electronic equipment. Consequently, the electronic equipment has the problem in which it is difficult for the operator thereof to recognize the selection of a selection item on the screen as a sense of a hand or a finger of the operator.

Accordingly, Japanese Patent Application Laid-Open Publication No. 2003-228455 proposes a device provided with a drive motor for performing the rotation control of a jog dial (rotary operation device), which device executes the switching of the rotation control according to the rotation position of the jog dial among the control of adding an urging rotary force in the direction same as the rotation direction of the jog dial, the control of adding a loading rotary force in the direction reverse to the rotation direction of the jog dial, and the control of putting the jog dial into the state of performing free rotation without supplying any drive voltages to the drive motor, in order to cause an operator an operating feeling like the sense of touch (see the Publication).

The device disclosed in Japanese Patent Application Laid-Open Publication No. 2003-228455, however, the jog dial performs the urged rotation thereof in an interval of being approaching a selected component (selection item), performs the free rotation thereof in an interval of selecting the selected component, and performs the loaded rotation thereof in an interval of passing the selected component. That is, the device is configured to giving the jog dial thereof a rotary force only in the timings of transiting from a certain selection item to the next selection item, and not to apply any rotary forces to the jog dial in the timing when some selected component are selected. Consequently, the device disclosed in the Publication cannot give the operator thereof any operating feelings corresponding to a reaction force which is produced at the time of mechanically depressing a key, in the timing when a selected component is selected, although the device can enable the operator perceive the selection of each selected component. The device is not entirely satisfactory for an operator requiring a more distinct operating feeling.

### SUMMARY OF THE INVENTION

It is an object of the present invention to provide a rotary input device and electronic equipment enabling an operator to generate a more distinct operating feeling in the timing when a selection item is selected.

According to a first aspect of the invention, there is provided a rotary input device, including: a rotary operation device rotatable around an axis by receiving a rotary operation of an operator; a rotation detecting section to detect a rotation angle of the rotary operation device; a rotation driving section to apply a rotary force to the rotary operation device; a judging section to judge whether the rotation angle of the rotary operation device detected by the rotation detecting section is a predetermined angle corresponding to a selection item displayed on a display screen of a display section or not; a generating section to generate a switching signal for switching selection of the selection item when the judging section judges that the rotation angle of the rotary operation device is the predetermined angle; and a rotation controlling section to control of a rotation drive of the rotary operation device so as to give the operator operating the rotary operation device a force sense by a combination of at least any two of applying the rotary force in a normal rotation direction to the rotary operation device, applying the rotary force in a reverse rotation direction to the rotary operation device, and stopping applying the rotary force to the rotary operation device, by the rotation driving section when the judging section judges that the rotation angle of the rotary operation device is the predetermined angle.

According to a second aspect of the invention, there is provided electronic equipment, including: a display section; a rotary operation device rotatable around an axis by receiving a rotary operation of an operator; a rotation detecting section to detect a rotation angle of the rotary operation device; an ultrasonic motor to apply a rotary force to the rotary operation device; a pressure detecting section to detect a magnitude of a pressure to the rotary operation device in an axial direction thereof; judging section to judge whether the rotation angle of the rotary operation device detected by the rotation detecting section is a predetermined angle corresponding to a selection item displayed on a display screen of a display section or not; a generating section to generate a switching signal for switching selection of the selection item when the judging section judges that the rotation angle of the rotary operation device is the predetermined angle; a display control section to perform display control of switching selection of the selection item displayed on the display screen of the display section based on the switching signal generated by the generating section; and a rotation controlling section to control of a rotation drive of the rotary operation device so as to give the operator operating the rotary operation device a force sense by a combination of at least any two of applying the rotary force in a normal rotation direction to the rotary operation device, applying the rotary force in a reverse rotation direction to the rotary operation device, and stopping applying the rotary force to the rotary operation device, by the piezoelectric actuator when the judging section judges that the rotation angle of the rotary operation device is the predetermined angle, wherein the display control section changes a number of the selection items selectable on the display screen of the display section according to a magnitude of the pressure detected by the pressure detecting section; the predetermined angle is set according to a number of the selection items selectable on the display screen of the display section; and the rotation controlling section changes the rotary force to be applied to the rotary operation device based on the magnitude of the pressure detected by the pressure detecting section.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a perspective view of a cellular phone handset equipped with a rotary input device of an embodiment to which the present invention is applied;
FIG. 2 is a block diagram showing the functional configuration of the cellular phone handset of the present embodiment;
FIG. 3 is a perspective view of the external appearance of a rotary input device of the present embodiment;
FIG. 4 is a sectional view taken along the line IV-IV of FIG. 3;
FIG. 5 is an exploded view of the rotary input device of the present embodiment;
FIG. 6 is a diagram showing an example of a selection screen displayed on the display screen of the display section of the cellular phone handset;
FIG. 7 is a diagram showing an example of the selection screen displayed on the display screen of the display section;
FIG. 8 is a diagram showing an example of the selection screen displayed on the display screen of the display section;
FIG. 9 is a diagram showing an example of the selection screen displayed on the display screen of the display section;
FIG. 10 is a diagram showing an example of the selection screen displayed on the display screen of the display section;
FIG. 11 is a diagram showing an example of the selection screen displayed on the display screen of the display section;
FIG. 12 is a diagram showing an example of the selection screen displayed on the display screen of the display section; and
FIG. 13 is a diagram showing an example of the selection screen displayed on the display screen of the display section.

### DETAILED DESCRIPTION OF THE PREFERRED EMBODIMENTS

In the following, an embodiment according to the present invention will be described with reference to the accompanying drawings. Incidentally, the scope of the present invention is not limited to the following embodiment and shown examples.

In the following, a cellular phone handset for performing verbal communication by wireless communication is illustrated to be described as electronic equipment according to the present invention.

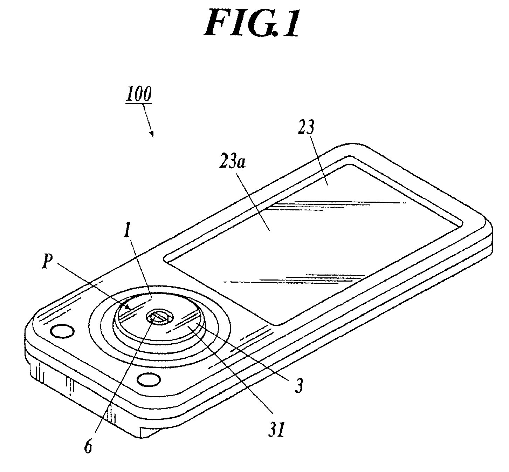

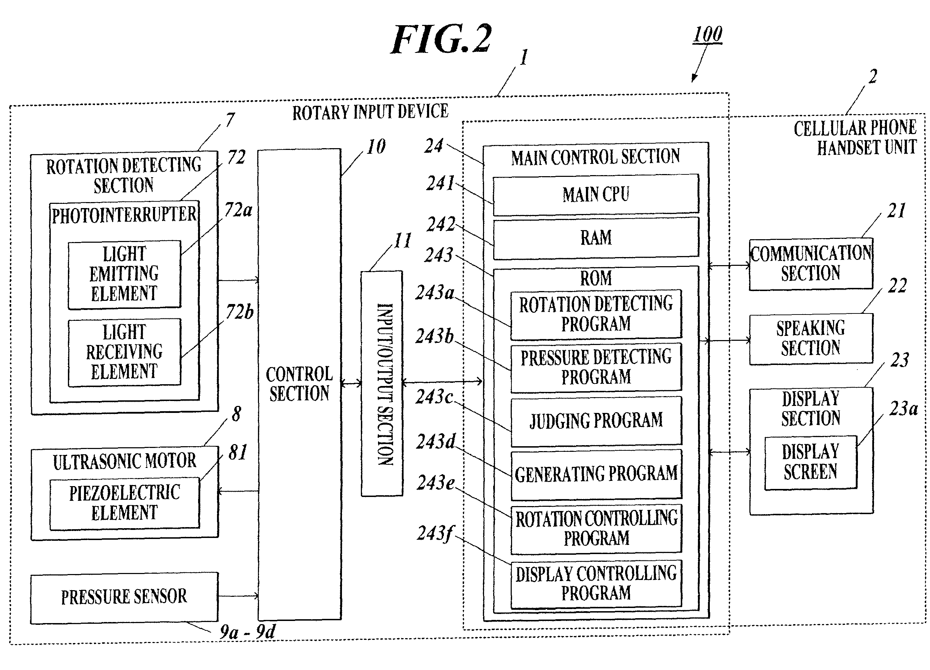

The cellular phone handset 100 of the present embodiment is composed of a rotary input device 1 for an operator to perform an input operation and a cellular phone handset unit 2 connected to the rotary input device 1 to be operated by the rotary input device 1 as shown in FIGS. 1 and 2.

First, the rotary input device 1 according to the present embodiment will be described.

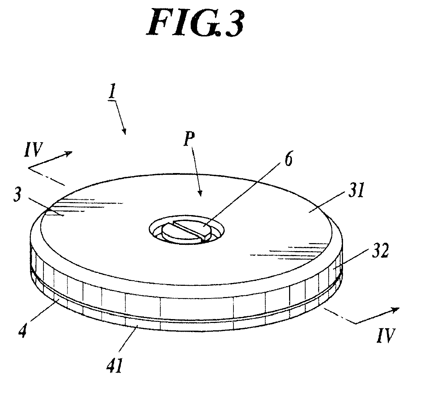

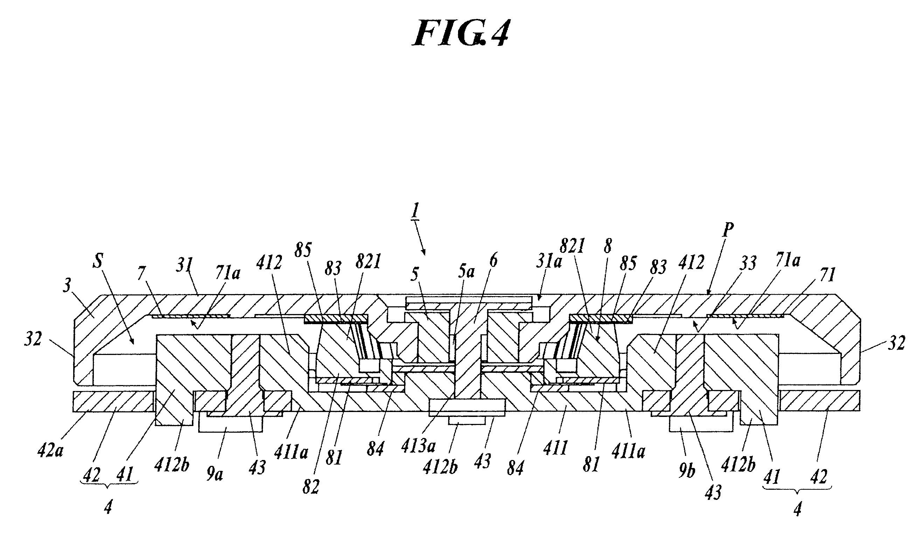

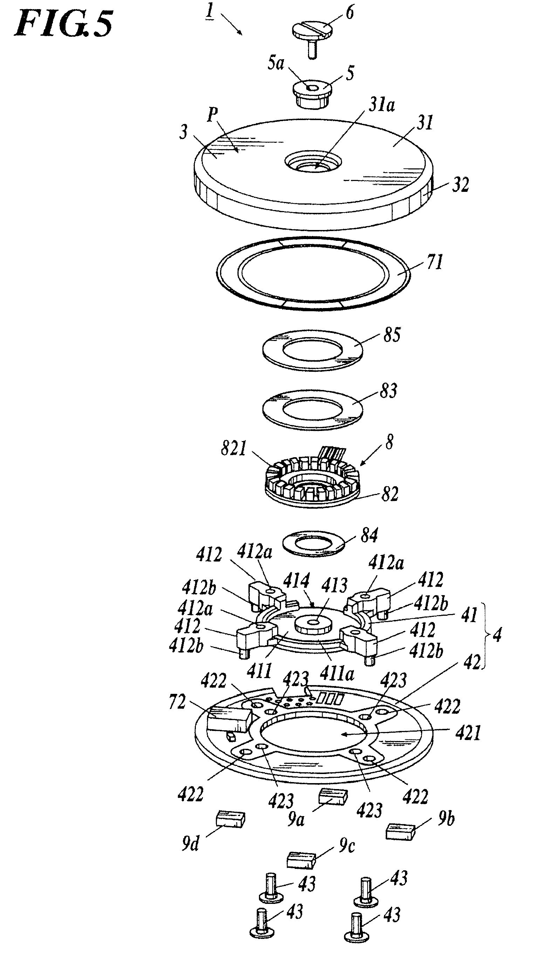

The rotary input device 1 is composed of a rotary operation device 3 capable of being manually rotated by an operator and a supporting stand 4 provided on the bottom surface side of the rotary operation device 3 to support the rotary operation device 3 rotatably, as shown in FIGS. 2-5. The whole of the rotary input device 1 presents almost a disk shape.

The rotary operation device 3 is composed of a circular top surface section 31 including an aperture section 31a at the center thereof and a circumferential surface section 32 projecting downward from the edge portion of the top surface section 31 over the whole circumference. The rotary operation device 3 is provided at a position to cover the upper side of the supporting stand 4 to form the top surface and the circumferential surface of the rotary input device 1. The top surface section 31 forms an operation surface P for an operator to perform a rotary operation. The operator performs an input operation to the cellular phone handset unit 2 by rotating the rotary operation device 3 while pressing a point of the top surface section 31 by a fingertip of the operator, or while pinching the circumferential surface section 32 by fingers of the operator. The rotary operation device 3 may be formed of, for example, a material having a radiation performance, such as aluminum, a material having a strong resistance property against an impact from the outside, or a resin.

The supporting stand 4 is composed of a base 41 and a polychlorinated biphenyl (PCB) substrate 42 connected to the base 41. The supporting stand 4 is provided at a position to cover the aperture on the bottom surface side of the rotary operation device 3 and forms the bottom surface of the rotary input device 1.

The base 41 is composed of almost a doughnut disk-like pedestal section 411 having an aperture at the center thereof, four extension sections 412 extending from the periphery 411a of the pedestal section 411 to the outside. Each of the extension sections 412 is provided with a screw attaching threaded hole 412a and a projection 412b extending downward from the under surface on the outer side of the threaded hole 412a. The base 41 is made of, for example, a material such as polycarbonate.

The PCB substrate 42 is formed in a tabular ring having almost the same outer diameter as that of the rotary operation device 3, and the pedestal section 411 of the base 41 is fit into the aperture section 421 at almost the center of the PCB substrate 42 to be attached thereto. Moreover, attaching holes 422 for attaching the projections 412b provided on the under surface of the respective extension sections 412 of the base 41 to project therefrom are formed on the PCB substrate 42. Then, the pedestal section 411 of the base 41 is fit into the aperture section 421 of the PCB substrate 42 to be attached thereto, and the respective projections 412b of the base 41 are fit into the respective attaching holes 422 of the PCB substrate 42, and thereby the PCB substrate 42 and the base 41 are integrally connected to each other.

Moreover, four hole sections 423, each having a diameter slightly larger than that of each of the threaded holes 412a, are formed in the PCB substrate 42 at the positions overlapping with those of the threaded holes 412a of the base 41 correspondingly to the threaded holes 412a. Screws 43, such as a thin head screw, are screwed into the threaded holes 412a of the base 41 from the under surface side of the PCB substrate 42 through the hole sections 423 of the PCB substrate 42, and thereby the PCB substrate 42 and the base 41 are fixed to each other.

Moreover, four pressure sensors (pressure detecting sections) 9a-9d detecting depression forces of a rotary operation of an operator are provided to be arranged on the back surface 42a of the PCB substrate 42.

Furthermore, a bearing 5 is provided to be arranged on the inner circumferential surface of the aperture section 31a of the top surface section 31 of the rotary operation device 3, and a through-hole 5a for inserting a screw 6 functioning as the rotation axis (axis) of the rotary operation device 3 is formed at the center of the bearing 5. Then, the screw 6, such as a countersunk screw, is inserted into the through-hole 5a of the bearing 5 from the upper side of the rotary operation device 3, and further the bottom end of the screw 6 projecting downward is screwed into a female screw 413a formed on the inner circumferential surface of an aperture 413 at the center of the base 41. The screw 6 and the supporting stand 4 are thus fixed to each other. Hereby, the rotary operation device 3 is thus connected to the supporting stand 4 rotatably around the screw 6.

Moreover, a space S is formed between the rotary operation device 3 and the supporting stand 4. In this space S, are provided to be arranged a rotation detecting section (rotation detecting member) 7 to detect the rotation angle of the rotary operation device 3, an ultrasonic motor (rotation driving section, piezoelectric actuator) 8 to rotate the rotary operation device 3, a control section 10 to control each section of the rotary input device 1, an input/output section 11 to perform the transmission and reception of various signals with the cellular phone handset unit 2, and the like.

The rotation detecting section 7 is composed of, for example, a ring-like code wheel 71, a photointerrupter 72 to detect the displacement of the rotation angle of the code wheel 71.

The code wheel 71 is fixated on the side of the back surface 33 of the top surface section 31 of the rotary operation device 3, and rotates in conjunction with the rotation of the rotary operation device 3. A reflecting surface reflecting light is printed on the under surface 71a of the code wheel 71 at a predetermined pitch of a detection pattern including two phases composed of an A phase and a B phase along the circumferential direction of the code wheel 71.

The photointerrupter 72 is a reflection type photointerrupter composed of a light emitting element 72a, such as a light emitting diode (LED), and a light receiving element 72b, such as a photo integrated circuit (IC). The photointerrupter 72 is mounted at a position opposed to the code wheel 71 on the PCB substrate 42, and is connected to the control section 10. Moreover, the light receiving element 72b includes at least two light receiving surfaces and is configured to output the detection signals of the A phase and the B phase, which differs from each other by 90 degrees. The photointerrupter 72 receives the reflected light of a light emitted from the light emitting element 72a toward the code wheel 71 with the light receiving element 72b, and counts the reflection light. Thereby, the photointerrupter 72 detects the rotation quantity and the rotation direction of the rotary operation device 3, and outputs the detection results to the control section 10 as the detection signals of the A phase and the B phase. The control section 10 specifies the rotation angle of the rotary operation device 3 on the basis of the detection signals of the A phase and the B phase showing the rotation quantity and the rotation direction of the rotary operation device 3 detected by the photointerrupter 72.

The ultrasonic motor 8 is composed of a piezoelectric element 81, a ring-like stator 82, a rotor 83 touching the top surface of the stator 82, and the like. The ultrasonic motor 8 is driven under the control of the control section 10 top rotate the rotary operation device 3 around the screw 6 as the rotation axis.

The stator 82 is fitted into a ring-like concave portion 414 formed on the top surface portion of the base 41, and is fixed to the base 41 with a tabular ring-like double-coated adhesive tape 84. The stator 82 is equipped with a plurality of convex parts 821 provided to be arranged along the circumferential direction of the stator 82 at the upper part thereof, and the stator 82 is equipped with the plurality of piezoelectric elements 81, which generates vibrational energy in response to an application of a voltage and is arranged along the circumferential direction of the stator 82 on the under surface thereof. The rotor 83 is made of a material, such as high-molecular polyethylene, and has a tabular ring-like shape. The rotor 82 is provided to be arranged at a position sandwiched between the stator 82 and the rotary operation device 3 on the inner circumference side of the code wheel 71.

Moreover, a tabular ring-like double-coated adhesive tape 85 is provided to be arranged between the rotary operation device 3 and the rotor 83, and both the side of the tabular ring-like double-coated adhesive tape 85 is adhered on the back surface 33 of the rotary operation device 3 and the top surface of the rotor 83, respectively. The top surface of the rotor 83 is adhered to the under surface of the double-coated adhesive tape 85 adhered on the back surface 33 of the rotary operation device 3, and the under surface of the rotor 83 is touched to the convex parts 821 of the stator 82. The under surface of the rotor 83 is made to have a high friction coefficient, and the rotor 83 is configured to rotate in the counter direction to the direction of a progressive wave generated by a vibration of the stator 82 touched to the under surface.

Then, when a drive signal is applied from the control section 10 to the piezoelectric element 81, the whole body of the stator 82 is vibrated by an ultrasonic vibration of the piezoelectric element 81, and a progressive wave is transmitted to the rotor 83. Then, the rotor 83 rotates. Then, the rotary force of the rotor 83 is transmitted to the rotary operation device 3, and thereby the rotary operation device 3 is rotated. The rotary input device 1 is thus configured. Furthermore, the rotary input device 1 is configured to be able to freely set the magnitude and the rotation direction of the rotary force of the rotary operation device 3 caused by the ultrasonic vibration of the piezoelectric element 81 by controlling the drive frequency of the drive signal applied to the piezoelectric element 81.

The double-coated adhesive tapes 84 and 85 are made of, for example, a gel-state material, such as acrylic foam, or a rubber material. Consequently, these double-coated adhesive tapes 85 and 84 provided to be arranged on the upper side and the lower side of the stator 82, respectively, carry out a function as a damper absorbing abnormal noises generated at the time when the stator 82 is driven.

The pressure sensors 9a-9d are fixated on the side of the back surface 42a of the PCB substrate 42 at the intervals of 90° in the circumferential direction of the PCB substrate 42. Each of the pressure sensors 9a-9d is connected to the control section 10, and detects the magnitude of a pressure applied to the rotary operation device 3 in the axial direction thereof by a rotary operation of the rotary operation device 3 by an operator to output the detected magnitude to a main control section 24 through the control section 10. The main control section 24 specifies the depression force in the axial direction in the rotary operation on the basis of the pressure detection signals output from the respective four pressure sensors 9a-9d.

As the pressure sensors 9a-9d, for example, a resistive film type pressure sensor, a diffusion type one, a film formation type one, an electrical capacitance type one, and a mechanical type one can be used.

Moreover, the rotary operation device 3, the code wheel 71, and the rotor 83 are provided to be arranged on the same axis and are configured to be rotated around the screw 6 as the rotation axis fixed to the supporting stand 4.

The control section 10 is configured to include a central processing unit (CPU), a random access memory (RAM), and a read only memory (ROM) (none of them is shown), and the like, and the control section 10 is connected to the main control section 24. The control section 10 controls each section of the rotary input device 1, and performs the transmission and reception of various signals with the main control section 24.

The input/output section 11 is connected to the cellular phone handset unit 2. The input/output section 11 transmits the detection results of various sensors and the like to a main CPU 241 of the cellular phone handset unit 2.

To put it concretely, the input/output section 11 outputs detection signals of the A phase and the B phase showing a rotation quantity and a rotation direction of the rotary operation device 3 output from the photointerrupter 72 of the rotation detecting section 7, and pressure detection signals output from the four pressure sensors 9a-9d provided to be arranged on the side of the back surface 42a of the PCB substrate 42 to the main control section 24. Moreover, the main control section 24 inputs a drive signal for driving the ultrasonic motor 8 into the input/output section 11.

Next, the cellular phone handset unit 2 according to the present embodiment will be described.

The cellular phone handset unit 2 is, as shown in FIG. 2, configured to include a communication section 21, which is equipped with an antenna (not shown) to perform the transmission and the reception of a wireless signal with external equipment, a speaking section 22, which is equipped with a speaker, a microphone, and the like (not shown) to perform the input and the output of a sound, a display section 23, which is equipped with a display screen 23a and displays various screens on the display screen 23a, and the main control section 24 performing the integrated control of the whole cellular phone handset 100. Incidentally, because publicly known techniques are used for the communication section 21 and the speaking section 22, the details of the communication section 21 and the speaking section 22 are omitted.

The display section 23 is configured to be equipped with, for example, the display screen 23a, such as a liquid crystal display (LCD), and displays various screens on the display screen 23a in accordance with instructions from the main control section 24.

The main control section 24 is configured to be equipped with a main CPU 241, a RAM 242, a ROM 243, and the like, and is connected to the control section 10. The main control section 24 controls each section of the cellular phone handset unit 2 on the basis of input operation signals transmitted from the rotary input device 1.

The main CPU 241 reads out processing programs and the like stored in the ROM 243 to expand the read-out processing programs into the RAM 242 and execute the expanded processing programs in accordance with input signals input from each section of the cellular phone handset unit 2 and the rotary input device 1, and then the main CPU 241 controls the whole cellular phone handset 100 by outputting control signals to each section thereof.

The RAM 242 is equipped with a program storing region for expanding various programs to be executed by the main CPU 241, and a data storing region for storing input data and processing results produced at the time of the execution of the processing programs. The RAM 242 is used as a work area of the main CPU 241.

The ROM 243 stores the processing programs, data, and the like in advance, and stores, for example, a rotation detecting program 243a, a pressure detecting program 243b, a judging program 243c, a generating program 243d, a rotation controlling program 243e, a display controlling program 243f, and the like.

The rotation detecting program 243a is a program for enabling the main CPU 241 to realize the function of detecting the rotation angle of the rotary operation device 3. In the present embodiment, the rotation detecting program 243a, the main CPU 241, and the rotation detecting section 7 constitute a rotation detecting section.

The pressure detecting program 243b is a program for enabling the main CPU 241 to realize the function of detecting the magnitude of a pressure to the rotary operation device 3 in the axial direction thereof. In the present embodiment, the pressure detecting program 243b, the main CPU 241, and the pressure sensors 9a-9d constitute a pressure detecting section.

The judging program 243c is a program for enabling the main CPU 241 to realize the function of judging whether the rotation angle of the rotary operation device 3 detected by the execution of the rotation detecting program 243a is in predetermined angles corresponding to the selection items displayed on the display screen 23a of the display section 23 or not. In the present embodiment, the judging program 243c and the main CPU 241 constitute a judging section.

The generating program 243d is a program for enabling the main CPU 241 to realize the function of generating a switching signal for switching the selection of a selection item when the rotary angle of the rotary operation device 3 is judged to be at a predetermined angle by the execution of the judging program 243c. In the present embodiment, the generating program 243d and the main CPU 241 constitute a generating section.

The rotation controlling program 243e is a program for enabling the main CPU 241 to realize the function of controlling the rotation drive of the rotary operation device 3 so as to give an operator operating the rotary operation device 3 a force sense by the combination of at least two of applying a rotary force to the rotary operation device 3 in the normal rotation direction, applying a rotary force in the reverse rotation direction, and stopping applying any rotation forces, by the ultrasonic motor 8 when the rotation angle of the rotary operation device 3 is judged to reach a predetermined angle by the execution of the judging program 243c. In the present embodiment, the rotation controlling program 243e and the main CPU 241 constitutes a rotation controlling section.

The display controlling program 243f is a program for enabling the main CPU 241 to realize the function of performing the display control of switching the selection of a selection item displayed on the display screen 23a of the display section 23 on the basis of a switching signal generated by the execution of the generating program 243d. In the present embodiment, the display controlling program 243f and the main CPU 241 constitute a display control section.

Then, the aforesaid rotation detecting section 7, the ultrasonic motor 8, the pressure sensors 9a-9d, the control section 10, the input/output section 11, and the main control section 24 constitute the rotary input device 1 of the present invention in the present embodiment.

Incidentally, the "force sense" does not mean a simple the sense of touch caused by a vibration, but means the sense of a weight weighing on a finger at the time of rotating the rotary operation device 3 in the present invention. To put it concretely, the "force sense" means the sense of feeling of a rotation to be light or to be heavy.

The present embodiment can give an operator a force sense by rotating the rotary operation device 3 for 3-6 msec or by 1-5 degrees, and by giving the torque equal to or more than 0.05 Ncm.

Here, the rotation driving processing and the display controlling processing to be performed by executing the rotation detecting program 243a, the pressure detecting program 243b, the generating program 243d, the judging program 243c, the rotation controlling program 243e, and the display controlling program 243f are described, and the operation of the cellular phone handset 100 of the present embodiment is described.

When a screen on which a plurality of selection items is displayed on the display screen 23a (the screen on the display screen 23a in which a plurality of selection items is displayed is hereinafter referred to as a "selection screen") equipped in the cellular phone handset unit 2, an operator rotates the rotary operation device 3 while pressing one point of the operation surface P of the rotary operation device 3 with a fingertip of the operator to select an objective selection item among the selection items displayed on the selection screen. Furthermore, after the operator has selected the objective selection item by a rotary operation of the rotary operation device 3, the operator performs a determination operation to determine the selected selection item, and thereby the operator performs an input operation to the cellular phone handset unit 2.

Here, as described above, when an operator performs a rotary operation of the rotary operation device 3, the rotation detecting section 7 outputs an A phase/B phase detection signal showing the rotation quantity and the rotation direction of the rotary operation device 3 to the main control section 24 through the control section 10 and the input/output section 11, and the main control section 24 specifies the rotation angle of the rotary operation device 3 on the basis of the A phase/B phase detection signal. Furthermore, the main control section 24 monitors whether the specified rotation angle of the rotary operation device 3 reaches a selection angle (predetermined angle) corresponding to a selectable selection item in a selection screen on the basis of a detection signal output from the rotation detecting section 7.

Then, if the rotation angle of the rotary operation device 3 reaches the selection angle corresponding to the selectable selection item in the selection screen, then the main control section 24 generates a switching signal for switching the selection of the selection item on the selection screen, and outputs the generated switching signal to the display section 23. Thereby, the main control section 24 performs the display control of switching the selection of the selection item on the selection screen displayed on the display screen 23a. Moreover, the main control section 24 outputs a drive signal to the ultrasonic motor 8 to drive the ultrasonic motor 8 to perform the rotation drive of the rotary operation device 3 so as to give a force sense an operator operating the rotary operation device 3 while performing the display control of the display screen 23a.

The aforesaid selection angle (predetermined angle) is set according to the number of the selection items selectable in a selection screen displayed on the display screen 23a.

In the present embodiment, the selection angle is set every angle obtained by dividing the angle (360°) for one rotation of the rotary operation device 3 by the number of selectable selection items on a selection screen into equal parts. The more the selectable selection items on the selection screen are, the smaller the selection angles are. The fewer the selectable selection items on the selection screen are, the larger the selection angles are. That is, for example, if the number of the selectable selection items is 12, the selection angles are set by the 30°. If the number of the selectable selection items is 24, the selection angles are set by the 15°.

Moreover, as described above, the four pressure sensors 9a-9d provided to be arranged on the side of the back surface 42a of the PCB substrate 42 output pressure detection signals showing the pressures to the rotary operation device 3 in the axial direction thereof to the main control section 24 through the control section 10, and the main control section 24 specifies the pressure to the rotary operation device 3 in the axial direction thereof on the basis of the detection signals output from the respective pressure sensors 9a-9d. Then, the main control section 24 judges the magnitude of the pressure to the rotary operation device 3 in the axial direction thereof specified on the basis of the pressure detection signals output from the respective pressure sensors 9a-9d to execute the rotation driving control of the rotary operation device 3 and the display controlling processing of the display screen 23a according to the magnitude of the pressure to the rotary operation device 3 in the axial direction thereof.

In the present embodiment, the main control section 24 detects the magnitude of the pressure in the axial direction in the levels of three grades of "large, middle, and small," and executes the control according to the levels of the detected pressures.

For example, it is supposed that the input operation at the normal time is set in the case where the magnitude of the pressure to the rotary operation device 3 in the axial direction is "small."

If the main control section 24 judges that the magnitude of the pressure to the rotary operation device 3 in the axial direction is "middle," then the main control section 24 outputs a display switching signal instructing the switching the number of the selection items to the display section 23 to increase the number of the selection items displayed on the selection screen of the display screen 23a, and increases the number of divisions of the selection angles per rotation of the rotary operation device 3. Incidentally, all the selection items displayed on the selection screen at this time are selectable selection items.

Moreover, if the main control section 24 judges that the magnitude of the pressure to the rotary operation device 3 in the axial direction is "middle," the main control section 24 drives the ultrasonic motor 8 to rotate with a rotary force larger than that at the normal tim, at the timing when the rotation angle of the rotary operation device 3 gets to a selection angle corresponding to a selectable selection item on the selection screen.

Moreover, if the main control section 24 judges that the magnitude to the rotary operation device 3 in the axial direction is "large," the main control section 24 judges that a determination operation determining the selection of a selection item in the selection screen is performed, and executes the processing according to the determined selection item.

Furthermore, if the main control section 24 judges that a plurality of selection item groups, each including a plurality of selection items is displayed on the selection screen, and that the magnitude of the pressure to the rotary operation device 3 in the axial direction is "large," the main control section 24 outputs a display switching signal instructing the switching of a selectable selection item group on the selection screen to the display section 23 to perform the switching of the selectable selection item group on the selection screen.

As described above, the present embodiment can select a selection item displayed on the display screen 23a by a rotary operation of the rotary operation device 3, and is configured to apply a rotary force to the rotary operation device 3 by the driving of the ultrasonic motor 8 in conjunction with the switching of the selection of a selection item on the display screen 23a. Moreover, the present embodiment is configured to be able to instruct the switching of the selection screen displayed on the display screen 23a (a change of the number of selection items), the switching of the magnitude of the rotary force to be applied to the rotary operation device 3, the determination of a selection item, the switching of a selectable selection item group, and the like, by a change of the force of depressing the rotary operation device 3 by an operator.

Incidentally, the rotary operation and the depression operation of the rotary operation device 3 are not necessarily to be separately performed, the depression operation may be executed simultaneously to the execution of the rotary operation.

Here, concrete examples are given to describe the aforesaid selection item selecting processing, the rotation driving processing of the rotary operation device 3, the switching processing of the selection screen displayed on the display screen 23a (a change of the number of selection items), the switching processing of the number of divisions of the selection angle per rotation of the rotary operation device 3 and the magnitude of a rotary force, the selection item determining processing, the selectable selection item group switching processing, and the like.

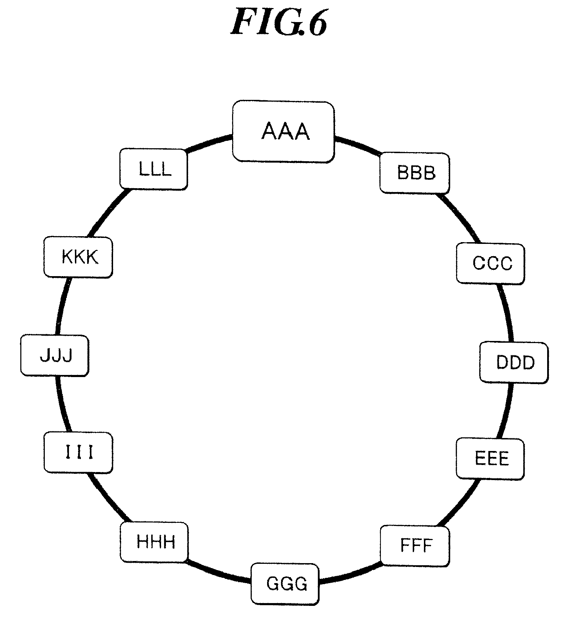

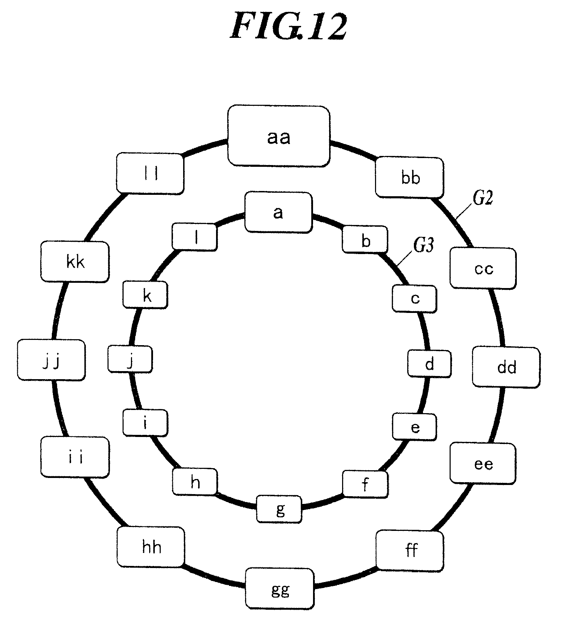

FIG. 6 shows an example of a selection screen displayed on the display screen 23a of the display section 23. In the selection screen of FIG. 6, 12 selection items (selectable selection items) are displayed in a ring-like juxtaposition at regular intervals. Moreover, a selected selection item (the selection item "AAA" in FIG. 6) among the 12 selection items is displayed to be positions at the uppermost part of the ring, and is displayed to be larger than the other selection items.

As described above, because the selection angles are set every angle obtained by dividing the angle (360°) for one rotation of the rotary operation device 3 by the number of the selectable selection items on the selection screen into equal parts, the selection angles are set by the 30° if the number of the selectable selection items is 12, as shown in FIG. 6.

That is, if the selection angle for selecting the selection item "AAA" (default selection item) is set as "0°" in a rotary operation of the rotary operation device 3 on the selection screen of FIG. 6, the selection angle for selecting the selection item "BBB" is "30°"; the selection angle for selecting the selection item "CCC" is "60°"; the selection angle for selecting the selection item "DDD" is "90°"; the selection angle for selecting the selection item "EEE" is "120°"; the selection angle for selecting the selection item "FFF" is "150°"; the selection angle for selecting the selection item "GGG" is "180°"; the selection angle for selecting the selection item "HHH" is "210°"; the selection angle for selecting the selection item "III" is "240°"; the selection angle for selecting the selection item "JJJ" is "270°"; the selection angle for selecting the selection item "KKK" is "300°"; the selection angle for selecting the selection item "LLL" is "330°."

Hereby, the selection screen of FIG. 6 shows that the switching of the selection of a selection item is performed in order every rotation of 30° of the rotary operation device 3.

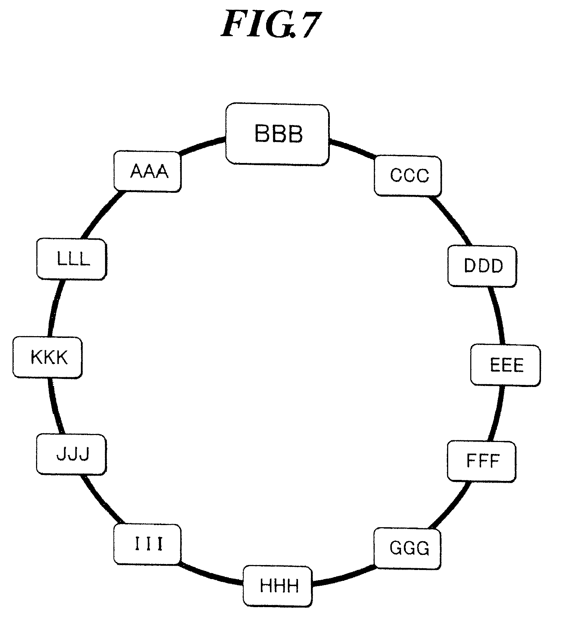

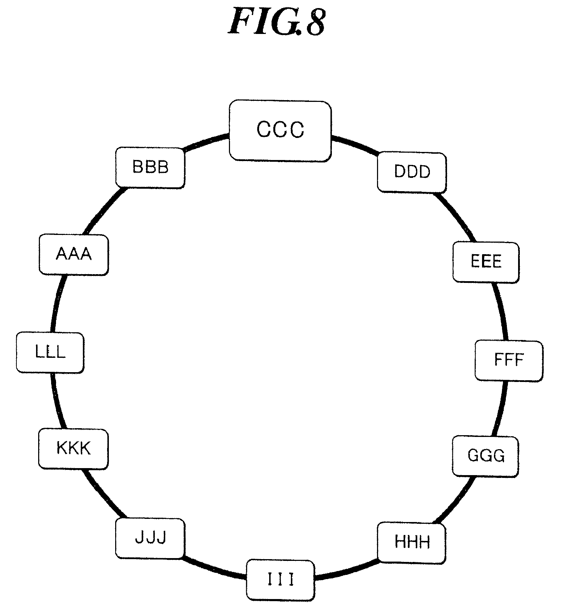

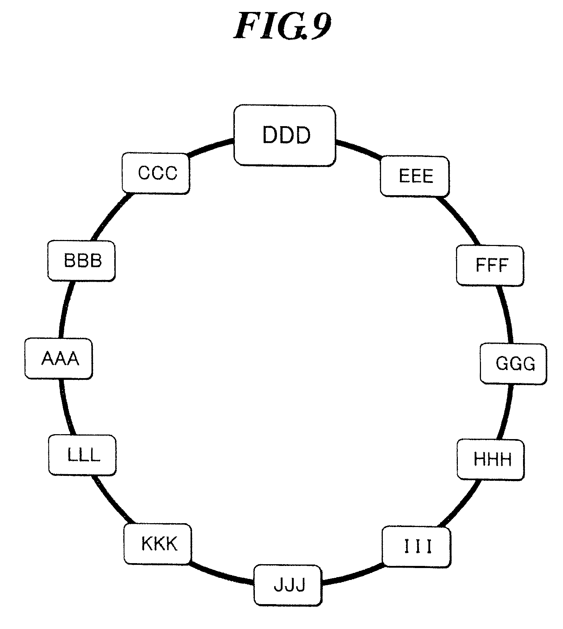

For example, when an operator rotates the rotary operation device 3 in the clockwise direction by 30° and the rotation angle of the rotary operation device 3 becomes "30°" with the rotation angle at which the selection item "AAA" is selected taken as a reference ("0°"), the ring on the selection screen rotates in the counterclockwise rotation by 30° and the selection item "BBB" is selected as shown in FIG. 7. Moreover, when the operator further rotates the rotary operation device 3 in the clockwise direction by 30° from the rotation angle of "30°" and the rotation angle of the rotary operation device 3 becomes "60°," the ring on the selection screen is rotated in the counterclockwise direction by 30° and the selection item "CCC" is selected as shown in FIG. 8. Moreover, when the operator further rotates the rotary operation device 3 in the clockwise direction by 30° from the rotation angle of "60°" and the rotation angle of the rotary operation device 3 becomes "90°," the ring on the selection screen is rotated in the counterclockwise direction by 30° and the selection item "DDD" is selected as shown in FIG. 9.

In this way, the selection item selected every rotation of the rotary operation device 3 in the clockwise direction by 30° by an operator is switched in the order of "AAA" → "BBB" → "CCC" → "DDD" → ... "LLL" → "AAA" → ... on the selection screen of FIG. 6. Moreover, the selection item selected every rotation of the rotary operation device 3 in the counterclockwise direction by 30° by an operator is switched in the order of "AAA" → "LLL" → "KKK" → "JJJ" → ... "BBB" → "AAA" → ....

Moreover, the selection of the selection item on the selection screen displayed on the display screen 23a is switched every rotation of the rotary operation device 3 by 30° by an operator. On the other hand, the ultrasonic motor 8 is driven by the control of the main control section 24, and the rotary operation device 3 is driven to rotate.

In the rotation drive of the rotary operation device 3, the main control section 24 combines at least any two controls of the control of applying a rotary force in the normal rotation direction to the rotary operation device 3 by the ultrasonic motor 8, the control of giving a rotary force in the reverse rotation direction to the rotary operation device 3, and the control of stopping applying any rotary forces to the rotary operation device 3, and executes the combined controls to present a force sense to an operator.

For example, if the rotary operation device 3 is subjected to the rotary operation in the clockwise direction, the main control section 24 executes the control of applying a rotary force in the reverse rotation direction to the rotary operation device 3, and the control of applying a rotary force in the normal rotation direction to the rotary operation device 3 in this order. That is, the selection of the selection item is switched every rotation of the rotary operation device 3 by 30° in the clockwise direction by the pressing down of the operation surface P of the rotary operation device 3 by an operator with a fingertip of the operator. On the other hand, the rotary operation device 3 is rotated in the counterclockwise direction and the clockwise direction alternately.

Moreover, if the rotary operation device 3 is subjected to the rotary operation in the counterclockwise direction, the main control section 24 executes the control of applying a rotary force in the normal rotation direction to the rotary operation device 3, and the control of applying a rotary force in the reverse rotation direction to the rotary operation device 3 in this order. That is, the selection of the selection item is switched every rotation of the rotary operation device 3 by 30° in the counterclockwise direction by the pressing down of the operation surface P of the rotary operation device 3 by an operator with a fingertip of the operator. On the other hand, the rotary operation device 3 is rotated in the clockwise direction and the counterclockwise direction alternately.

In this manner, force senses are given to the operator by alternately executing the control of applying a rotary force in the normal rotation direction to the rotary operation device 3 and the control of applying a rotary force in the reverse rotation direction to the rotary operation device 3 at the timing when the switching of a selection item is performed by a rotary operation of the rotary operation device 3, and thereby it becomes possible to enable the operator to recognize the switching of a selection item clearly.

Moreover, the main control section 24 sequentially executes the control of applying a rotary force in the reverse rotation direction to the rotary operation device 3, the control of stopping applying any rotary forces to the rotary operation device 3, and the control of applying a rotary force in the normal rotation direction to the rotary operation device 3 at the timing when predetermined selection items (e.g. selection items of selection angles of "0°, 90°, 180°, and 270°") are selected by rotary operations of the rotary operation device 3. That is, the selection of the predetermined selection items (e.g. the selection items of the selection angles "0°, 90°, 180°, and 270°") is switched every rotation of the rotary operation device 3 by 90° by the pressing down of the operation surface P of the rotary operation device 3 with a fingertip of an operator, while the rotary operation device 3 is alternately rotated in the counterclockwise direction and the clockwise direction intermittently.

Since the control of applying a rotary force in the normal rotation direction to the rotary operation device 3 and the control of stopping applying any rotary forces to the rotary operation device 3, and the control of applying a rotary force in the reverse rotation direction to the rotary operation device 3 are alternately executed at the timing when the selection of the predetermined selection items (e.g. the selection items of the selection angles of "0°, 90°, 180°, and 270°) is switched by a rotation operation of the rotary operation device 3 in such a manner, a further distinct force sense is led to be given to the operator, and it is able to enable the operator to surely recognize the selection of the predetermined selection items.

Moreover, the operator can rotate the rotary operation device 3 more largely by depressing the rotary operation device 3 with a force larger than that at the normal time.

That is, when the operator depresses the rotary operation device 3 with a force larger than that at the normal time, and when the main control section 24 judges that the magnitude to the rotary operation device 3 in the axial direction thereof is "middle" on the basis of the detection signals output from the respective pressure sensors 9a-9d in response to the depression of the rotary operation device 3, the main control section 24 drives the ultrasonic motor 8 to rotate with a rotary force larger than that at the normal time at the timing when the rotation angle of the rotary operation device 3 gets to a selection angle corresponding to a selectable selection item on the selection screen by rotary operation of the rotary operation device 3. By this, the operator receives a larger force sense from the rotary operation device 3, and is led to obtain a more distinct operating feeling.

In this way, it is possible to change the magnitude of the rotary force to be applied to the rotary operation device 3 by changing the depression force of the rotary operation device 3 by an operator, and thereby it is possible that individual operators obtain a severally desired operating feeling.

Moreover, the operator can increase the number of divisions of the selection items per rotation of the rotation operation device 3 by depressing the rotary operation device 3 with a force larger than that at the normal time, and can increase the number of the selection items on a selection screen.

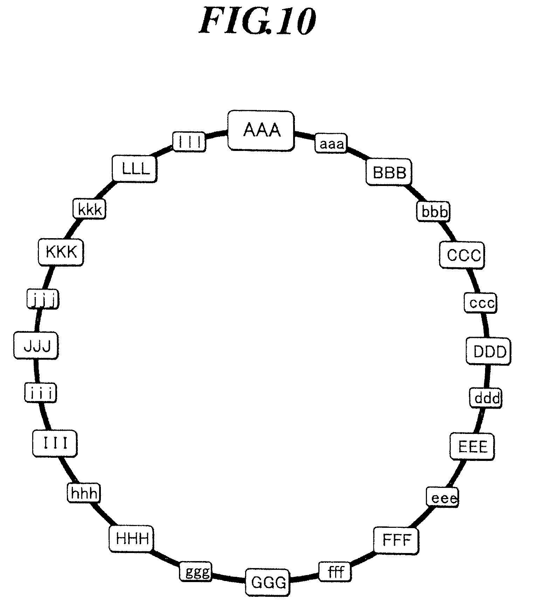

For example, when an operator depresses the rotary operation device 3 with a force larger than that at the normal time on the selection screen of FIG. 6, and when the main control section 24 judges that the magnitude of the pressure to the rotary operation device 3 in the axial direction thereof is "middle" on the basis of the detection signals output from the respective pressure sensors 9a-9d in response to the depression of the rotary operation device 3, the main control section 24, as shown in FIG. 10, increases the number of the selection items on a selection screen, and increases the number of divisions of the selection angles per rotation of the rotary operation device 3. Furthermore, the main control section 24 lessens the selection angles for selecting the respective selection items. On the selection screen of FIG. 10, 24 selection items (selectable selection items) are displayed in ring-like juxtaposition at equal intervals.

As described above, the selection angles are set every angle obtained by dividing the angle (360°) for a rotation of the rotary operation device 3 by the number of the selectable selection items on a selection screen into equal parts, and consequently the selection angles are set by the 15° when the number of the selectable selection items increases to 24 as shown in FIG. 10.

That is, if the selection angle for selecting the selection item "AAA" is set to "0°" by a rotary operation of the rotary operation device 3 on the selection screen of FIG. 10, the selection angle for selecting the selection item "aaa" is "15°"; the selection angle for selecting the selection item "BBB" is "30°"; the selection angle for selecting the selection item "bbb" is "45°"; the selection angle for selecting the selection item "CCC" is "60°"; the selection angle for selecting the selection item "ccc" is "75°"; the selection angle for selecting the selection item "DDD" is "90°"; the selection angle for selecting the selection item "ddd" is "105°"; the selection angle for selecting the selection item "EEE" is "120°"; the selection angle for selecting the selection item "eee" is "135°"; the selection angle for selecting the selection item "FFF" is "150°"; the selection angle for selecting the selection item "fff" is "165°"; the selection angle for selecting the selection item "GGG" is "180°".

Hereby, the selection screen of FIG. 10 shows to switch the selection of a selection item in order every rotation of the rotary operation device 3 by 15°.

That is, the selection screen of FIG. 10 shows to switch the selection item to be selected every rotation of the rotary operation device 3 in the clockwise direction by 15° by an operator in the order of: "AAA" → "aaa" → "BBB" → "bbb" → ... → "lll" → "AAA" → .... The selection item to be selected is switched every rotation of the rotary operation device 3 in the counterclockwise direction by 15° by an operator in the order of: "AAA" → "lll" → "LLL" → "kkk" → ... → "aaa" → "AAA" → ....

Because the number of divisions of the selection items per rotation of the rotary operation device 3 increases or decreases by a change of the force of the operator's depressing of the rotary operation device 3, the rotation quantity of the rotary operation device 3 necessary for the switching of the selection of the respective selection items can be changed, and the movement quantity on the operation screen in the case of performing the rotary operation of the rotary operation device 3 at the same angle and the same speed can be changed.

Moreover, it is possible to change the number of the selection items on the selection screen displayed on the display screen 23a by changing the depression force of the rotary operation device 3 by an operator, and to efficiently select the objective selection item.

Moreover, an operator can determine the selection of a selection item by depressing the rotary operation device 3 with a force further larger than the depression force necessary for switching the number of the selection items after the selection of any one of the selection items displayed on the selection screen by a rotary operation of the rotary operation device 3.

For example, if an operator depresses the rotary operation device 3 with a force larger than the depression force necessary for switching the number of the selection items on the selection screen of FIG. 6 and the main control section 24 judges that the magnitude of the pressure to the rotary operation device 3 in the axial direction thereof is "large" on the basis of the detection signals output from the respective pressure sensors 9a-9d in response to the operator's depression of the rotary operation device 3, then the main control section 24 judges that the selection of a selection item on the selection screen is determined, and executes the processing corresponding to the determined selection item.

That is, for example, if an operator depresses the rotary operation device 3 so that the magnitude of the pressure in the axial direction may be "large" in the state in which the selection item "BBB" is selected as shown in the selection screen of FIG. 7, then the selection of the selection item "BBB" is led to be determined, and the processing corresponding to the selection item "BBB," the selection of which has been determined, is executed.

Furthermore, if a plurality of selection item groups, each including a plurality of selection items, is displayed on the display screen 23a, an operator can switch selectable selection item groups by depressing the rotary operation device 3 with a force further larger than the depression force necessary for switching the number of selection items.

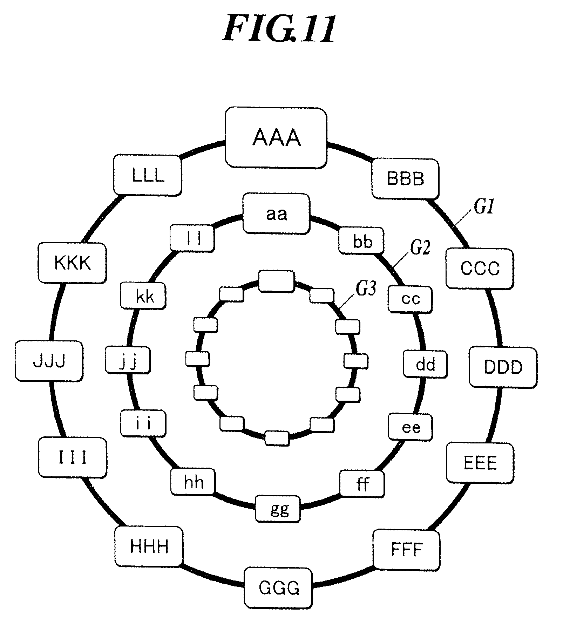

FIG. 11 shows an example of a selection screen displayed on the display screen 23a of the display section 23. In this selection screen, a plurality of selection item groups, each including a plurality of selection items, is displayed with the selection items belonging to one selection item group forming one ring. In the selection screen of FIG. 11, three selection item groups are displayed with three-dimensional depth, and a selectable selection item group G1 is displayed on the most front side (or the outermost peripheral side in a two-dimensional display). Moreover, a second selection item group G2 is displayed on the back side (or an inner side in the two-dimensional display) of the selectable selection item group G1, and furthermore a third selection item group G3 is displayed on the back side (or the inner side in the two-dimensional display) of the selection item group G2. In this state, if an operator rotates the rotary operation device 3 in the clockwise direction, the ring situated on the most front side rotates in the counterclockwise direction by 30° every rotation of the rotary operation device 3 by 30°, and the selection items included in the selectable selection item group G1 are selected in order.

Then, if an operator depresses the rotary operation device 3 with a force larger than the depression force necessary for the switching of the number of the selection items on the selection screen of FIG. 11 and the main control section 24 judges that the magnitude of the pressure to the rotary operation device 3 in the axial direction is "large" on the basis of the detection signals output from the respective pressure sensors 9a-9d in response to the operator's depression of the rotary operation device 3, then the main control section 24 performs the switching of the selectable selection item group as shown in FIG. 12. In the selection screen in FIG. 12, the selection item group G1 displayed in the most front side in the selection screen of FIG. 11 disappears, and the second selection item group G2 is made to be selectable.

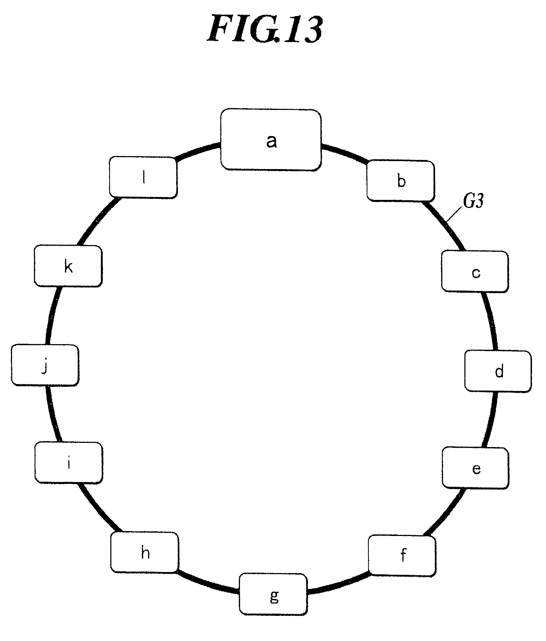

Furthermore, if an operator depresses the rotary operation device 3 with a force larger than the depression force necessary for the switching of the number of the selection items on the selection screen of FIG. 12 and the main control section 24 judges that the magnitude of the pressure to the rotary operation device 3 in the axial direction is "large" on the basis of the detection signals output from the respective pressure sensors 9a-9d in response to the operator's depression of the rotary operation device 3, then the main control section 24 performs the switching of the selectable selection item group as shown in FIG. 13. In the selection screen in FIG. 13, the selection item group G2 displayed in the most front side in the selection screen of FIG. 12 disappears, and the third selection item group G3 is made to be selectable.

Furthermore, an operator depresses the rotary operation device 3 with a required force to perform the change of the number of selection items, the switching of the magnitude of a rotary force, the switching of a selectable selection item group, and the like, and after that, performs the depression operation of the rotary operation device 3 with the force of the magnitude required for each processing again. Thereby the operator can return the number of the selection items, the magnitude of the rotary force, and the selectable selection item group to their original states.

According to the cellular phone handset 100 (electronic equipment) equipped with the rotary input device 1 of the present embodiment described above, a rotary input device comprises: a rotary operation device 3 rotatable around an axis by receiving a rotary operation of an operator; a rotation detecting section (rotation detecting section 7, rotation detecting program 243a, and main CPU 241) to detect a rotation angle of the rotary operation device 3; a rotation driving section (ultrasonic motor 8) to apply a rotary force to the rotary operation device 3; and pressure detecting section (pressure sensors 9a-9d, pressure detecting program 243b, main CPU 241) to detect a magnitude of a pressure to the rotary operation device 3 in an axial direction thereof. Moreover, a judging section (judging program 243c and main CPU 241) judges whether the rotation angle of the rotary operation device 3 detected by the rotation detecting section (rotation detecting section 7, rotation detecting program 243a, and main CPU 241) is a predetermined angle corresponding to a selection item displayed on a display screen 23a of a display section 23 or not; a generating section (generating program 243d and main CPU 241) generates a switching signal for switching selection of the selection item when the judging section (judging program 243c and main CPU 241) judges that the rotation angle of the rotary operation device 3 is the predetermined angle; and a display control section (display controlling program 243f and main CPU 241) performs a display control of switching the selection of the selection item displayed on the display screen 23a of the display section 23 on the basis of the switching signal generated by the generating section (generating program 243d and main CPU 241). Moreover, a rotation controlling section (rotation controlling program 243e and main CPU 241) controls a rotation drive of the rotary operation device 3 so as to apply a force sense the operator operating the rotary operation device 3 by a combination of at least any two of applying the rotary force in a normal rotation direction to the rotary operation device 3, applying the rotary force in a reverse rotation direction to the rotary operation device 3, and stopping applying the rotary force to the rotary operation device 3, by the ultrasonic motor 8 when the judging section (judging program 243c and main CPU 241) judges that the rotation angle of the rotary operation device 3 is the predetermined angle.

That is, when the rotation angle of the rotary operation device 3 is the predetermined angle corresponding to the selection item, the rotation driving section executes a rotation drive combining at least any two of applying the rotary force in the normal rotation direction to the rotary operation device 3, applying the rotary force in the reverse rotation direction to the rotary operation device 3, and stopping applying the rotary force to the rotary operation device 3 in conjunction with the switching of the selection of the selection item displayed on the display screen 23a of the display section 23. Consequently, it is possible to enable the operator to recognize the switching of the selection of the selection item more surely by giving the operator a force sense by the rotation of the rotary operation device 3 at the timing when the selection of the selection item is switched by the rotary operation of the rotary operation device 3. Thereby, it becomes possible to give the operator a distinct operating feeling at the timing when a selection item is selected in the rotary input device 1 and the electronic equipment equipped with the rotary input device 1.

Moreover, the display control section (display controlling program 243f and main CPU 241) changes the number of selectable selection items on the display screen 23a of the display section 23 according to the magnitude of the pressure detected by the pressure detecting section (pressure sensors 9a-9d, pressure detecting program 243b, and main CPU 241). Consequently, the operator can change the number of the selectable selection items on the display screen 23a by changing the pressure to the rotary operation device in the axial direction thereof. Consequently, an objective selection item can efficiently been selected to make the rotary operation device easy to handle for the operator by increasing the number of the selectable selection items only in a necessary case.

Moreover, the predetermined angle is set according to the number of the selectable selection items on the display screen 23a of the display section 23. Accordingly, if it is set that the predetermined angle is set to be larger when the number of the selectable selection items is small, and that the predetermined angle is set to be smaller when the number of the selectable selection item is large, then, even if the number of the selectable selection items is large, it is not needed to rotate the rotary operation device 3 in a large scale, and the efficient rotary operation according to the number of the selectable selection items can be performed.

Furthermore, the rotation controlling section changes the rotary force to be applied to the rotary operation device 3 according to the magnitude of the pressure detected by the pressure detecting section. Thus, the operator can change the rotary force of the rotary operation device 3 generated when the selection of a selection item is switched by changing the pressure to the rotary operation device 3 in the axial direction thereof. Consequently, it becomes possible for individual operators to obtain a requiring operating feeling in the rotary input device 1, and the rotary input device 1 becomes the one further easy to handle for the operators.

Incidentally, the scope of the present invention is not limited to the contents of the embodiment described above, but various improvements and changes of the design thereof may be performed without departing from the sprit and the scope of the present invention.

For example, the change of the number of the selection items, the switching of the magnitude of a rotary force, the determination of a selection item, the magnitude (large, middle, and small) of the pressure in the axial direction required for the switching of a selectable selecting item group, all described above in the aforesaid embodiment, are only examples, and the magnitude of the pressure required for instructing each of these pieces of processing can be set arbitrarily every piece of processing.

For example, if the magnitude of the pressure to the rotary operation device 3 in the axial direction thereof is large, the number of the selectable selection items displayed on the display screen 23a may be decreased. If the magnitude of the pressure to the rotary operation device 3 in the axial direction thereof is small, the number of the selectable selection items displayed on the display screen 23a may be increased.

Moreover, the magnitude of the pressure to the rotary operation device 3 in the axial direction may be detected more finely. The change of the number of the election items, the switching of the magnitude of the rotary force, the determination of a selection item, and the switching of a selectable selection item group may be executed more finely according to the magnitude of the pressure.

Furthermore, the rotary operation device 3 may be configured so as to perform the processing (such as the switching of the drive frequency of the ultrasonic motor 8, the switching of a rotation speed, and the switching of the combination of the rotary forces to be applied to the rotary operation device 3) other than the change of the number of the selection items, the switching of the magnitude of a rotary force, the determination of a selection item, and the switching of a selectable selection item group, according to the magnitude of the pressure to the rotary operation device 3 in the axial direction thereof.

Moreover, in the aforesaid embodiment, the number of the selection items displayed on the display screen 23a is set to be changed according to the magnitude of the pressure to the rotary operation device 3 in the axial direction thereof. The number of the selection items displayed on the display screen 23a, however, may be set to be constant, and only the selectable selection items may be changed among the selection items displayed on the display screen 23a according to the magnitude of the pressure to the rotary operation device 3 in the axial direction.

For example, if the magnitude of the pressure to the rotary operation device 3 in the axial direction is "small" when 24 selection items are displayed on the selection screen of the display screen 23a, then it is treated that only 12 selection items among the 24 selection items are set as selectable selection items. If an operator performs a rotary operation of the rotary operation device 3 in this state, then not-selectable selection items are skipped, and only the 12 selectable selection items can be selected in order. On the other hand, if the magnitude of the pressure to the rotary operation device 3 in the axial direction is "large," all of the 24 selection items are treated as selectable selection items. If an operator performs the rotary operation of the rotary operation device 3, all of the selection items can be selected in order.

Moreover, although the cellular phone handset 100 has been illustrated as the electronic equipment equipped with the rotary input device 1 according to the present invention in the embodiment described above, the rotary input device 1 of the present invention is not limited to the cellular phone handset, but the present invention can applied to any electronic equipment as long as the electronic equipment can perform an input operation by the rotary input device 1. The rotary input device 1 of the present invention may be applied to, for example, the other portable terminal devices, such as a portable audio player and a personal digital assistance (PDA), audio visual (AV) equipment, such as a television receiver, and a personal computer. Moreover, the rotary input device 1 may previously be incorporated in electronic equipment, or may be used by being connected to electronic equipment as an external device as a single body.

Moreover, although the optical rotation detecting section 7 composed of the toric code wheel 71 and the photointerrupter 72 has been illustrated as the rotation detection section detecting the rotation angle of the rotary operation device 3 in the embodiment described above, the rotation detecting section 7 is an example of the rotation detection section, and any configuration may be used as long as the configuration can detect the rotation angle of the rotary operation device 3. For example, a mechanical type (contact type) rotation detecting section, a magnetic type one, an electrostatic type one performing position detection by means of an electrostatic capacity change of an electrode, and the like can be used.

Furthermore, an absolute type rotary encoder capable of detecting an absolute position may be used in addition to the detection of the rotation quantity and the rotation direction of the rotary operation device 3.

Moreover, although the ultrasonic motor 8 has been illustrated as the rotation driving section to perform the rotation driving of the rotary operation device 3 in the embodiment described above, the ultrasonic motor 8 is an example of the rotation driving section, and any configuration can be used as long as the configuration can perform the rotation driving of the rotary operation device 3. For example, a static actuator performing driving by using the mutual absorption and repellence of electrostatic charges as motive power, an electromagnetic actuator performing driving by using a force caused by mutual interaction between a magnetic field and electric power, a magnetostrictive actuator, a hydraulic cylinder, a pneumatic cylinder, and the like can be used. Moreover, the drive control of the rotation driving section may be the control of transmitting the motive power of an actuator to a driven body, such as the rotary operation device 3, as it is, or may be a stepping motor operating in proportion to a drive pulse number. Moreover, an actuator performing driving by rotating a driven body may be used, or a linear actuator performing the driving by linearly moving a driven body may be used.

Moreover, although the case of providing the four pressure sensors 9a-9d to arrange on the back surface side of the PCB substrate 42 has been described in the embodiment described above, the arrangement positions of the pressure sensors are not limited to the four positions. The pressure sensors may be provided to be arranged at any positions as long as the pressure sensors can detect the pressures to the rotary operation device 3 in the axial direction thereof at the arranged positions. Moreover, also the number of the pressure sensors is not limited to four, and any numbers may be adopted as long as the number is one or more. Moreover, the pressure sensors are not limited to the ones detecting the amounts of pressure, but may be the one capable of detecting whether a pressure equal to or more than a predetermined value is applied or not, such as a tactile switch.

According to the embodiment, there is provided a rotary input device, including: a rotary operation device rotatable around an axis by receiving a rotary operation of an operator; a rotation detecting section to detect a rotation angle of the rotary operation device; a rotation driving section to apply a rotary force to the rotary operation device; a judging section to judge whether the rotation angle of the rotary operation device detected by the rotation detecting section is a predetermined angle corresponding to a selection item displayed on a display screen of a display section or not; a generating section to generate a switching signal for switching selection of the selection item when the judging section judges that the rotation angle of the rotary operation device is the predetermined angle; and a rotation controlling section to control of a rotation drive of the rotary operation device so as to give the operator operating the rotary operation device a force sense by a combination of at least any two of applying the rotary force in a normal rotation direction to the rotary operation device, applying the rotary force in a reverse rotation direction to the rotary operation device, and stopping applying the rotary force to the rotary operation device, by the rotation driving section when the judging section judges that the rotation angle of the rotary operation device is the predetermined angle.

Preferably, the rotary input device further including a pressure detecting section to detect a pressure to the rotary operation device in an axial direction thereof, wherein the rotation controlling section changes the rotary force to be applied to the rotary operation device based on a pressure detection result of the pressure detecting section.

Preferably, the pressure detecting section can detect a magnitude of the pressure; the rotation controlling section changes the rotary force to be applied to the rotary operation device according to the magnitude of the pressure detected by the pressure detecting section.

Preferably, the rotary input device further including a pressure detecting section to detect a pressure to the rotary operation device in an axial direction, wherein the predetermined angle is set based on a pressure detection result of the pressure detecting section.

Preferably, the pressure detecting section can detect a magnitude of the pressure; the predetermined angle is set according to the magnitude of the pressure detected by the pressure detecting section.

Preferably, the predetermined angle is set according to a number of the selection items selectable on the display screen of the display section.

Preferably, the rotation driving section is a piezoelectric actuator.

There is also provided electronic equipment, including: the rotary input device; the display section; and a display control section to perform display control of switching selection of the selection item displayed on the display screen of the display section based on the switching signal generated by the generating section.

Preferably, the electronic equipment further includes a pressure detecting section to detect the pressure to the rotary operation device in an axial direction thereof, and the display control section changes a number of the selection items selectable on the display screen of the display section according to a magnitude of the pressure detected by the pressure detecting section.

There is also provided electronic equipment, including: a display section; a rotary operation device rotatable around an axis by receiving a rotary operation of an operator; a rotation detecting section to detect a rotation angle of the rotary operation device; an ultrasonic motor to apply a rotary force to the rotary operation device; a pressure detecting section to detect a magnitude of a pressure to the rotary operation device in an axial direction thereof; judging section to judge whether the rotation angle of the rotary operation device detected by the rotation detecting section is a predetermined angle corresponding to a selection item displayed on a display screen of a display section or not; a generating section to generate a switching signal for switching selection of the selection item when the judging section judges that the rotation angle of the rotary operation device is the predetermined angle; a display control section to perform display control of switching selection of the selection item displayed on the display screen of the display section based on the switching signal generated by the generating section; and a rotation controlling section to control of a rotation drive of the rotary operation device so as to give the operator operating the rotary operation device a force sense by a combination of at least any two of applying the rotary force in a normal rotation direction to the rotary operation device, applying the rotary force in a reverse rotation direction to the rotary operation device, and stopping applying the rotary force to the rotary operation device, by the piezoelectric actuator when the judging section judges that the rotation angle of the rotary operation device is the predetermined angle, wherein the display control section changes a number of the selection items selectable on the display screen of the display section according to a magnitude of the pressure detected by the pressure detecting section; the predetermined angle is set according to a number of the selection items selectable on the display screen of the display section; and the rotation controlling section changes the rotary force to be applied to the rotary operation device based on the magnitude of the pressure detected by the pressure detecting section.

According to the present invention, when the rotation angle of a rotary operation device is a predetermined angle corresponding to a selection item, a rotation driving section executes the rotation drive of the combination of at least any two of applying a rotary force in the normal rotation direction to the rotary operation device, applying a rotary force in the reverse rotation direction to the rotary operation device, and stopping applying the rotary force to the rotary operation device in conjunction with the switching of the selection of a selection item displayed on the display screen of a display section. Consequently, it is possible to enable an operator to recognize the switching of a selection item more surely by giving the operator a force sense by the rotation of the rotary operation device at the timing when the selection of the selection item is switched by a rotary operation of the rotary operation device, and it becomes possible to give the operator a distinct operating feeling at the timing when a selection item is selected in a rotary input device and electronic equipment.

## Claims

1. A rotary input device, comprising:
a rotary operation device rotatable around an axis by receiving a rotary operation of an operator;
a rotation detecting section to detect a rotation angle of the rotary operation device;
a rotation driving section to apply a rotary force to the rotary operation device;
a judging section to judge whether the rotation angle of the rotary operation device detected by the rotation detecting section is a predetermined angle corresponding to a selection item displayed on a display screen of a display section or not;
a generating section to generate a switching signal for switching selection of the selection item when the judging section judges that the rotation angle of the rotary operation device is the predetermined angle; and
a rotation controlling section to control of a rotation drive of the rotary operation device so as to give the operator operating the rotary operation device a force sense by a combination of at least any two of applying the rotary force in a normal rotation direction to the rotary operation device, applying the rotary force in a reverse rotation direction to the rotary operation device, and stopping applying the rotary force to the rotary operation device, by the rotation driving section when the judging section judges that the rotation angle of the rotary operation device is the predetermined angle.

2. The rotary input device according to claim 1, further comprising a pressure detecting section to detect a pressure to the rotary operation device in an axial direction thereof, wherein the rotation controlling section changes the rotary force to be applied to the rotary operation device based on a pressure detection result of the pressure detecting section.

3. The rotary input device according to claim 2,
wherein
the pressure detecting section can detect a magnitude of the pressure;
the rotation controlling section changes the rotary force to be applied to the rotary operation device according to the magnitude of the pressure detected by the pressure detecting section.

4. The rotary input device according to claim 1, further comprising a pressure detecting section to detect a pressure to the rotary operation device in an axial direction, wherein the predetermined angle is set based on a pressure detection result of the pressure detecting section.

5. The rotary input device according to claim 4,
wherein
the pressure detecting section can detect a magnitude of the pressure;
the predetermined angle is set according to the magnitude of the pressure detected by the pressure detecting section.

6. The rotary input device according to any one of claims 1-5, wherein the predetermined angle is set according to a number of the selection items selectable on the display screen of the display section.

7. The rotary input device according to any one of claims 1-6, wherein the rotation driving section is a piezoelectric actuator.

8. Electronic equipment, comprising:
the rotary input device according to claim 1;
the display section; and
a display control section to perform display control of switching selection of the selection item displayed on the display screen of the display section based on the switching signal generated by the generating section.

9. The electronic equipment according to claim 8, further comprising a pressure detecting section to detect the pressure to the rotary operation device in an axial direction thereof,
the display control section changes a number of the selection items selectable on the display screen of the display section according to a magnitude of the pressure detected by the pressure detecting section.

10. Electronic equipment, comprising:
a display section;
a rotary operation device rotatable around an axis by receiving a rotary operation of an operator;
a rotation detecting section to detect a rotation angle of the rotary operation device;
an ultrasonic motor to apply a rotary force to the rotary operation device;
a pressure detecting section to detect a magnitude of a pressure to the rotary operation device in an axial direction thereof;
judging section to judge whether the rotation angle of the rotary operation device detected by the rotation detecting section is a predetermined angle corresponding to a selection item displayed on a display screen of a display section or not;
a generating section to generate a switching signal for switching selection of the selection item when the judging section judges that the rotation angle of the rotary operation device is the predetermined angle;
a display control section to perform display control of switching selection of the selection item displayed on the display screen of the display section based on the switching signal generated by the generating section; and
a rotation controlling section to control of a rotation drive of the rotary operation device so as to give the operator operating the rotary operation device a force sense by a combination of at least any two of applying the rotary force in a normal rotation direction to the rotary operation device, applying the rotary force in a reverse rotation direction to the rotary operation device, and stopping applying the rotary force to the rotary operation device, by the piezoelectric actuator when the judging section judges that the rotation angle of the rotary operation device is the predetermined angle, wherein
the display control section changes a number of the selection items selectable on the display screen of the display section according to a magnitude of the pressure detected by the pressure detecting section;
the predetermined angle is set according to a number of the selection items selectable on the display screen of the display section; and
the rotation controlling section changes the rotary force to be applied to the rotary operation device based on the magnitude of the pressure detected by the pressure detecting section.
